# EUROPÄISCHE PATENTSCHRIFT

(11) **EP 3 519 782 B1**
(45) Veröffentlichungstag und Bekanntmachung des Hinweises auf die Patenterteilung: **07.10.2020**
(21) Anmeldenummer: 17739876.5
(22) Anmeldetag: 14.07.2017
(51) Int. Cl.: G01G 23/08, G01G 23/00

(54) **VERWENDUNG EINES HYDRAULISCHEN STOSSDÄMPFERS UND LABORGERÄT**
USE OF A HYDRAULIC SHOCK ABSORBER AND LABORATORY DEVICE
UTILISATION D'UN AMORTISSEUR HYDRAULIQUE ET APPAREIL DE LABORATOIRE

(30) Priorität: 27.09.2016 DE 102016118184
(43) Veröffentlichungstag der Anmeldung: 07.08.2019
(73) Patentinhaber: Sartorius Lab Instruments GmbH & Co. KG, 37079 Göttingen (DE)
(72) Erfinder: GRAF, Winfried, 37127 Niemetal (DE); STÄNDER, Malte, 37308 Heiligenstadt (DE)
(74) Vertreter: Vigand, Philippe
(86) Internationale Anmeldenummer: PCT/EP2017/000849
(87) Internationale Veröffentlichungsnummer: WO 2018/059724

(56) Entgegenhaltungen:
- DE-C- 518 141
- JP-A- 2006 189 267

## Beschreibung

### Gebiet der Erfindung

Die Erfindung bezieht sich auf ein Laborgerät, insbesondere auf eine Messvorrichtung wie z.B. eine Wägevorrichtung, mit einem Gerätekörper, der auf einer Mehrzahl von an ihm angebrachten Stellfüßen auf einer Grundfläche aufstellbar ist.

### Stand der Technik

Aus der EP 2 652 468 B1 ist ein Spektroskop bekannt, dessen Gerätekörper auf vibrationsisolierenden Stellfüßen ruht. Jeder Stellfuß umfasst einen Elastomerkörper, dessen unterer Bereich in zwei Abschnitten von einer steifen Hülle umgeben ist. Während im oberen Abschnitt die steife Hülle und der Elastomerkörper fest miteinander verbunden sind, ist im unteren Abschnitt ein fluidgefüllter Ringraum zwischen dem Elastomerkörper und der steifen Hülle ausgebildet. Der Ringraum ist mit einem zentralen Hohlraum des Elastomerkörpers verbunden. Vibrationen einer Grundfläche, auf welcher das Spektrometer mit seinen Stellfüßen aufgestellt ist, werden durch den Strömungswiderstand beim Austausch des Fluids zwischen zentralem Hohlraum und Ringraum insbesondere in lateraler Richtung gedämpft. In vertikaler Richtung wird der Gerätekörper elastisch von dem oberen Bereich des Elastomerkörpers getragen.

Obgleich derartige vibrationsisolierende Stellfüße für eine Vielzahl von Präzisionsinstrumenten verwendbar sind, ist ihre Verwendung als Stellfüße für Präzisionswaagen ungünstig. Die Auflösung von Präzisionswaagen geht weit über das hinaus, was derartige, passive Vibrationsisolatoren zu leisten vermögen. Die dauerelastische Lagerung führt als solche zu einer Vibrationsanfälligkeit der Vorrichtung, die ein präzises Wägeergebnis stört. Daher weisen Präzisionswaagen üblicherweise steife Stellfüße auf, mit denen ihr Gerätekörper starr auf einem schweren Fundament, dem sognannten Wägestein, aufgestellt wird. Die Vibrationsisolation erfolgt entweder durch die schiere Masse des Wägesteins oder durch äußerst komplexe, aktive Vibrationsisolationsvorrichtungen im Wägestein oder in dessen Fundament.

Die US 3 982 738 A zeigt eine Waage, auf deren Übersetzungshebel zum Zweck der Transportsicherung ein Schwingungsdämpfer wirkt. Ferner weist die Waage einen federbelasteten Gerätefuß auf.

Die US 4 418 774 A zeigt eine Waage, die nach dem Prinzip der schwingenden Saite arbeitet. Diese Waage besitzt Schwingungsdämpfer zur Reduzierung des Einflusses von extern induzierten Schwingungen.

Moderne Präzisionswaagen können relativ klein gestaltet werden. Das heißt, es ist möglich, grundsätzlich mobile Geräte zu schaffen, die bedarfsweise umpositioniert werden können. Gleichwohl wiegen solche Geräte etliche Kilogramm, sodass zu ihrer Umpositionierung nicht unerhebliche Muskelkraft erforderlich ist, was ein filigranes Handling solcher Geräte erschwert oder gar unmöglich macht. Andererseits beinhaltet der Gerätekörper solcher Präzisionswaagen höchst empfindliche Elemente, die durch übermäßige Beschleunigungen, wie sie beim harten Aufstellen auf einer festen Unterlage auftreten, dejustiert oder sogar beschädigt werden können. Es besteht somit der Zielkonflikt zwischen einer Stoßdämpfung zur Erschütterungsreduktion beim Aufstellen einerseits und einer unelastischen Lagerung während des Betriebs andererseits. Wie oben erläutert, kann dieser Zielkonflikt von den bekannten, elastomeren Stellfüßen nicht überbrückt werden. Ein weiteres Problem stellt das Erfordernis dar, dass jede Präzisionswaage vor Inbetriebnahme sehr genau zu nivellieren ist, sodass ihre Wägemechanik exakt in ihrer vorbestimmten Solllage, meist exakt horizontal, orientiert ist. Dies setzt eine Höhenverstellbarkeit wenigstens eines ihrer Stellfüße voraus.

Die vorgenannten Ausführungen treffen natürlich nicht allein auf Präzisionswaagen, sondern auf etliche Arten von Laborgeräten, wie etwa Messinstrumente, Zentrifugen, Pipettierautomaten etc. zu. Die spezielle Erläuterung erfolgte nur deshalb im Kontext von Präzisionswaagen, weil die geschilderten Probleme hier besonders deutlich zu Tage treten. Die in der vorliegenden Beschreibung angegebene Erfindung bezieht sich jedoch auf beliebige Arten von Laborgeräten, wobei sich die erzielten Vorteile je nach Anwendungsfall deutlicher oder weniger deutlich darstellen.

Aus einem völlig anderen Technikgebiet sind sogenannte Industrie-Stoßdämpfer bekannt, wie sie z. B. in der EP 0 831 245 A2 beschrieben sind. Es handelt sich dabei um hydraulische Stoßdämpfer mit einem fluidgefüllten Hohlzylinder, in dem ein axial zwischen einer durch eine Federvorspannung unterstützten Vorschubstellung und einer entgegen der Federvorspannung einnehmbaren Rückzugstellung beweglicher Kolben angeordnet ist, der in dem Hohlzylinder einen vorderen axialen Fluidraum und einen hinteren axialen Fluidraum, die mittels wenigstens einer Drosselöffnung im Kolben fluidaustauschend miteinander verbunden sind, voneinander abgrenzt,
wobei der Kolben starr mit einer den vorderen Fluidraum durchsetzenden Kolbenstange verbunden ist und in seiner Rückzugstellung, in der das Volumen des hinteren axialen Fluidraums minimiert und das Volumen des vorderen axialen Fluidraums maximiert ist, an einem festen Anschlag anliegt.

Als weiteren Stand der Technik wird in der DE518141 eine Waage mit einem an der Unterseite herausragenden Fuß mit Stoßdämpfer offenbart, wobei dieser Stoßdämpfer keinen Anschlag aufweist.

Derartige Industrie-Stoßdämpfer finden vielfach dort Einsatz, wo Massen auf Förderbändern oder Rollenförderern transportiert und mehr oder weniger positionsgenau abgebremst werden müssen. Der fragliche Stoßdämpfer ist dabei an einem starren Rahmen montiert und ragt in antiparalleler Ausrichtung zur Bewegungsrichtung der Massen in deren Transportweg hinein. Die heranfahrende Masse kontaktiert das über den Hohlzylinder hinausragende Ende der Kolbenstange und überträgt seine kinetische Energie auf diese. Darauf fährt der Kolben aus seiner Vorschubstellung in seine Rückzugstellung, wobei das Dämpferfluid aus dem hinteren axialen Fluidraum durch den oder die Drosselöffnungen im Kolben in dem vorderen axialen Fluidraum strömt, was aufgrund der Strömungsreibung mit einer allmählichen Dämpfung der Kolbengeschwindigkeit bis hin zum Kolbenstillstand verbunden ist. Die Auslegung eines derartigen Industrie-Stoßdämpfers erfolgt stets in Ansehung der abzubremsenden Massen und ihrer Geschwindigkeit.

### Aufgabenstellung

Es ist die Aufgabe der vorliegenden Erfindung, eine gattungsgemäße Vorrichtung derart weiterzubilden, dass der oben erläuterte Zielkonflikt zwischen hinreichender Stoßdämpfung beim Aufstellen und inelastischer Lagerung beim Betrieb der Präzisionswaage überbrückt wird.

### Darlegung der Erfindung

Diese Aufgabe wird mit den Merkmalen von Anspruch 1 gelöst, nämlich durch Verwendung eines grundsätzlich bekannten Industrie-Stoßdämpfers als ein höhenverstellbar am Gerätekörper des Laborgerätes angeordneter Stellfuß, wobei die Federvorspannung so dimensioniert ist, dass das bei Aufstellung des Laborgerätes auf dem Stellfuß lastende Gewicht des Gerätekörpers hinreicht, den Kolben gedämpft in seine Rückzugstellung zu verfahren.

Es resultiert somit ein Laborgerät mit den Merkmalen des Oberbegriffs von Anspruch 3, das sich dadurch auszeichnet, dass wenigstens ein Stellfuß einen fluidgefüllten Hohlzylinder umfasst, in dem ein axial zwischen einer durch eine Federvorspannung unterstützten Vorschubstellung und einer entgegen der Federvorspannung einnehmbaren Rückzugstellung beweglicher Kolben angeordnet ist, der in dem Hohlzylinder einen vorderen axialen Fluidraum und einen hinteren axialen Fluidraum, die mittels wenigstens einer Drosselöffnung im Kolben fluidaustauschend miteinander verbunden sind, voneinander abgrenzt,
wobei der Kolben starr mit einer den vorderen axialen Fluidraum durchsetzenden Kolbenstange verbunden ist und in seiner Rückzugstellung, in der das Volumen des hinteren axialen Fluidraums minimiert und das Volumen des vorderen axialen Fluidraums maximiert ist, an einem festen Anschlag anliegt,
und wobei die Federvorspannung so dimensioniert ist, dass das beim Aufstellen des Laborgerätes auf dem Stellfuß lastende Gewicht des Gerätekörpers hinreicht, den Kolben gedämpft in seine Rückzugstellung zu verfahren.

Bevorzugte Ausführungsformen der Erfindung sind Gegenstand der abhängigen Patentansprüche.

Kerngedanke der vorliegenden Erfindung ist die eigentlich bestimmungsfremde Benutzung eines Industrie-Stoßdämpfers als Stellfuß eines Laborgerätes, insbesondere einer Wägevorrichtung, speziell einer stoßempfindlichen Präzisionswaage, wobei der Industriestoßdämpfer zur Erfüllung seiner Aufgabe als Stellfuß im Hinblick auf die Masse des Laborgerätes anders auszulegen ist, als dies bei seiner eigentlichen, bestimmungsgemäßen Verwendung der Fall wäre. Anders als bei seiner bestimmungsgemäßen Verwendung erfolgt die Auslegung erfindungsgemäß nämlich so, dass der Kolben in seine (maximale) Rückzugsstellung überführt und gegen seinen festen Anschlag gefahren wird. Dies wird bei der typischen Auslegung eines Industriestoßdämpfers gerade vermieden. Dass sich die besagten Industrie-Stoßdämpfer überhaupt zur erfindungsgemäßen, bestimmungsfremden Verwendung eignen, ist durchaus überraschend, da der zeitliche Verlauf ihrer Belastung bei der erfindungsgemäßen Verwendung deutlich anders verläuft als bei ihrem bestimmungsgemäßen Einsatz. Dort nimmt die auf den Kolben wirkende Kraft, die sich allein aus der kinetischen Energie der abzubremsenden Masse speist, kontinuierlich ab und verschwindet zum Prozessende hin vollständig. Bei der erfindungsgemäßen Verwendung hingegen spielt die kinetische Energie, d. h. im Wesentlichen die Geschwindigkeit, mit der das Laborgerät auf einer Grundfläche aufgesetzt wird, bei vernünftigem Handling nur eine untergeordnete Rolle. Hier speist sich die auf den Stoßdämpfer/Stellfuß wirkende Kraft vielmehr aus der gravitationsbedingten, potentiellen Energie, mithin aus dem Gewicht des Gerätekörpers. Dieser lastet auch bei Prozessende weiterhin dauerhaft auf dem Stoßdämpfer/Stellfuß. Gleichwohl haben Versuche gezeigt, dass die Überbrückung des o. g. Zielkonfliktes durch Anwendung der vorliegenden Erfindung durchaus möglich ist.

Um eine exakte Ausrichtung des Laborgerätes zu erreichen erfolgt die Anordnung des Stoßdämpfers/Stellfußes am Gerätekörper in höhenverstellbarer Weise. Hierzu ist bei einer bevorzugten Ausführungsform vorgesehen, dass der Hohlzylinder (wenigstens eines Stoßdämpfer/Stellfußes) ein Außengewinde, das in ein korrespondierendes Innengewinde am Gerätekörper eingeschraubt ist, sowie ein starr mit ihm verbundenes Rotations-Betätigungselement aufweist. Als Rotations-Betätigungselement kann bspw. ein klassisches Rändelrad dienen. Mit Hilfe des Rändelrades kann der gesamte Stoßdämpfer/Stellfuß relativ zu dem Innengewinde am Gerätekörper manuell rotiert werden, sodass sich die Vertikallage des Hohlzylinders und damit insbesondere auch die Lage des festen Anschlags vertikal variieren lässt. Alternativ kann eine motorische Höhenverstellbarkeit realisiert sein. Beispielsweise kann vorgesehen sein, dass der Hohlzylinder ein Außengewinde aufweist, das in ein korrespondierendes Innengewinde am Gerätekörper eingeschraubt ist, wobei das Innengewinde rotationsbeweglich am Gerätekörper gelagert und mit einem motorischen Rotationsantrieb versehen ist.

Es ist ohne weiteres möglich, sämtliche Stellfüße eines Laborgerätes, typischerweise drei oder vier, durch einen Industriestoßdämpfer, wie beschrieben, zu ersetzen. Eine solche Anordnung ist jedoch vergleichsweise teuer. Es hat sich bereits als hilfreich erwiesen, zusätzlich zu einem oder mehreren herkömmlichen Stellfüßen nur einen (oder wenige) Stoßdämpfer/Stellfuß einzusetzen. Dieser hat dann mit seiner Kolbenstange über den oder die herkömmlichen Stellfüße hinauszuragen und bremst beim Aufstellen des Laborgerätes dessen Gerätekörper bereits weitgehend ab, bevor die herkömmlichen Stellfüße mit der Grundfläche in Berührung kommen.

Um eine quasi asymptotische Abbremsung des Gerätkörpers zu realisieren, kann bei einer besonders günstigen Ausführungsform der Erfindung der Kolben (des Stoßdämpfer/Stellfußes) in seiner Seitenwand eine Mehrzahl von die axialen Fluidräume verbindenden Drosselöffnungen aufweisen, von denen umso mehr durch einen an der Kolbenseitenwand anliegenden, inneren Wandungsvorsprung des Hohlzylinders verschlossen sind, je weiter der Kolben aus seiner Vorschubstellung in Richtung auf seine Rückzugsstellung hin verfahren ist. Hierzu eignet sich insbesondere eine im Wesentlichen becherförmige Ausgestaltung des Kolbens, dessen Becheröffnung zum hinteren axialen Fluidraum gewandt ist. Die genannte Anordnung mehrerer Drosselöffnungen führt dazu, dass mit zunehmendem Rückzug des Kolbens immer weniger Kanäle zur Verfügung stehen, durch welche das Dämpferfluid vom hinteren in den vorderen axialen Fluidraum strömen kann. Die Dämpfungswirkung nimmt somit mit zunehmendem Einfahren des Stoßdämpfer/Stellfußes zu. Dies führt zu einem besonders sanften Anfahren des Kolbens an seinen Anschlag.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: die Bodenplatte des Gerätekörpers eines Laborgerätes mit drei erfindungsgemäßen Stellfüßen,
- Figur 2:: eine perspektivische Darstellung eines einzelnen Stellfußes,
- Figur 3:: eine teilweise ausgeblendete Schnittdarstellung des Stellfußes von Figur 2,
- Figur 4:: eine schematische Darstellung eines erfindungsgemäß verwendeten Stoßdämpfers in seiner Vorschubstellung,
- Figur 5:: den Stoßdämpfer von Figur 4 in seiner Rückzugstellung.

### Beschreibung bevorzugter Ausführungsformen

Gleiche Bezugszeichen in den Figuren deuten auf gleiche oder analoge Elemente hin.

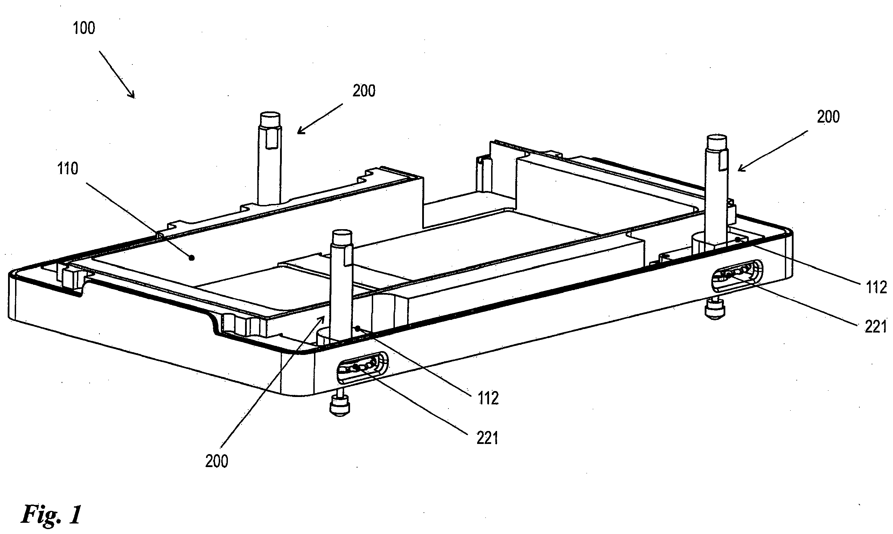

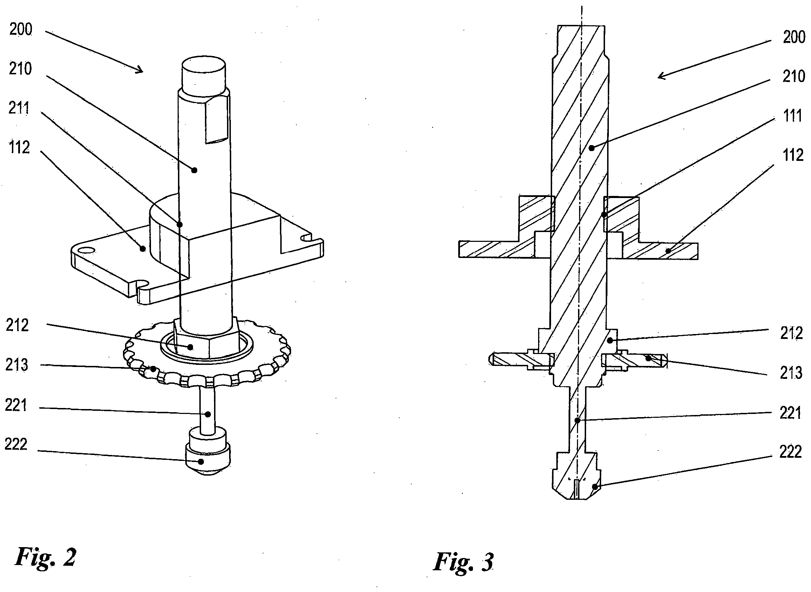

Figur 1 zeigt in perspektivischer Darstellung die Bodenplatte 110 eines im Übrigen nicht näher dargestellten Laborgerätes 100, welches drei Stellfüße 200 aufweist, die erfindungsgemäß in Form umgewidmeter Industrie-Stoßdämpfer realisiert sind. Zur näheren Beschreibung der Stellfüße 200 wird auf die Figuren 2-5 verwiesen.

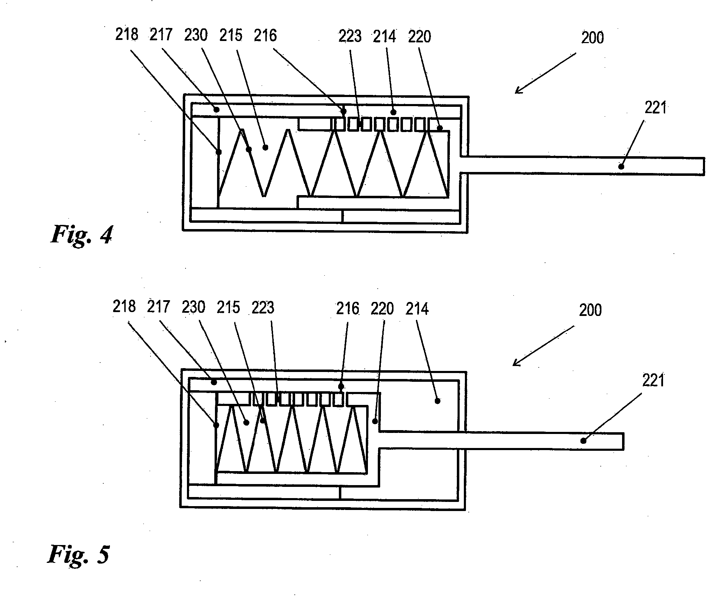

Figuren 2 und 3 zeigen in perspektivischer bzw. in teilweise ausgeblendeter Schnittdarstellung einen Stellfuß 200, der mit dem Außengewinde 211 seines Hohlzylinders 210 in ein Innengewinde 111 einer mit der Bodenplatte 110 starr verbundenen Tragplatte 112 eingeschraubt ist. Das "Innenleben" des Hohlzylinders 210 soll weiter unten im Kontext der Figuren 4 und 5 beschrieben werden.

Aus dem Hohlzylinder 210 ragt nach unten eine Kolbenstange 221 heraus, an deren distalem Ende ein kegelstumpfartig angespitzter Kopf 222 angeordnet ist. Die Kolbenstange 221 ist relativ zu dem in die Tragplatte 112 eingeschraubtem Hohlzylinder 210 axial beweglich. Mittels einer Kontermutter 212 ist ein Rändelrad 213 am Außengewinde 211 des Hohlzylinders 210 fixiert, sodass der Hohlzylinder 210 durch manuelle Rotation am Rändelrad 213 rotierbar und somit der Stellfuß 200 insgesamt vertikal zur Bodenplatte 110 verstellbar ist.

Die Figuren 4 und 5 zeigen einen erfindungsgemäß als Stellfuß 200 verwendeten Industrie-Stoßdämpfer in stark schematisierter Darstellung. In dem Hohlzylinder 210 ist ein becherförmiger Kolben 220 axial verschieblich angeordnet. Der Kolben 220 ist fest mit der Kolbenstange 221 verbunden, die die vordere Stirnseite des Hohlzylinders 210 dichtend durchsetzt. Die Dichtung kann in der Durchführung der Kolbenstange 222 durch die vordere Stirnseite des Hohlzylinders 210 angeordnet sein. Denkbar sind jedoch auch andere Dichtungsmaßnahmen, wie bspw. die Anordnung einer dichtenden Rollmembran oder Ähnliches.

Der Kolben 220 ist mittels einer Vorspannfeder 230 in seine in Figur 4 dargestellte Vorschubstellung vorgespannt. Er unterteilt den Innenraum des Hohlzylinders 210 in einen vorderen axialen Fluidraum 214 und einen hinteren axialen Fluidraum 215. In Figur 4 ist der vordere axiale Fluidraum 214 in seiner Größe minimiert, wohingegen der hintere axiale Fluidraum 215 in seiner Größer maximiert ist. In Figur 5 sind diese Verhältnisse umgekehrt. Die Fluidräume 214, 215 sind über Durchbrüche 223 in der Seitenwandung des Kolbens 220 miteinander verbunden.

Ausgehend von der unbelasteten, in Figur 4 dargestellten Vorschubstellung erfährt ein als Stellfuß 200 verwendeter Stoßdämpfer beim Aufstellen eines erfindungsgemäßen Laborgerätes auf einer Grundplatte eine axial gerichtete Kraft auf seine Kolbenstange 221. Dies führt zu einer Verschiebung des Kolbens 220 entgegen der Federvorspannung der Feder 230, wobei Dämpfungsfluid, mit dem der Hohlraum des Hohlzylinders 210 gefüllt ist, von dem hinteren axialen Fluidraum 215 durch die Drosselöffnungen 223 in den vorderen axialen Fluidraum 214 strömt. Aufgrund der Strömungsreibung dämpft dies die Axialbewegung des Kolbens 220.

Während des Eintauchens des Kolbens 220 passieren die Drosselöffnungen 223 sukzessive eine Schulter 216 eines Ringvorsprungs 217 im Inneren des Hohlzylinders 210 und werden auf diese Weise nacheinander abgedichtet. Der insgesamt zur Verfügung stehende Strömungspfad zwischen den beiden axialen Fluidräumen 214, 215 verringert sich daher mit dem Eintauchen des Kolbens 220, sodass die resultierende Dämpfung zunimmt. Der Kolben 220 kommt in seiner in Figur 5 dargestellten Rückzugsstellung am rückwärtigen Anschlag 218 zum Stillstand.

Bei der erfindungsgemäßen Auslegung des Stellfußes 200 genügt das auf dem Stellfuß 200 lastende Eigengewicht des Laborgerätes 100, um den Kolben 220 von seiner Vorschubstellung (Figur 4) in seine Rückzugstellung (Figur 5) zu überführen bzw. nach Überführung dort entgegen der Federkraft der Feder 230 zu halten. Es resultiert somit ein stets sanftes Aufsetzen des Laborgerätes, bei dem schädliche Beschleunigungen auf filigrane Elemente des Laborgerätes vermieden werden, gleichzeitig wird jedoch erreicht, dass das aufgestellte Laborgerät ohne elastische, vibrationsanfällige Zwischenelemente auf ihrer Grundfläche steht.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 100: Laborgerät
- 110: Unterschale von 100
- 111: Innengewinde von 112
- 112: Tragplatte von 110
- 200: Stellfuß
- 210: Hohlzylinder
- 211: Außengewinde von 210
- 212: Kontermutter
- 213: Rändelrad
- 214: vorderer axialer Fluidraum
- 215: hinterer axialer Fluidraum
- 216: Schulter von 217
- 217: Ringvorsprung
- 218: Endanschlag
- 220: Kolben
- 221: Kolbenstange
- 222: Kopf von 221
- 223: Drosselöffnung
- 230: Rückstellfeder

## Patentansprüche

1. Verwendung eines hydraulischen Stoßdämpfers mit einem fluidgefüllten Hohlzylinder (210), in dem ein axial zwischen einer durch eine Federvorspannung unterstützten Vorschubstellung und einer entgegen der Federvorspannung einnehmbaren Rückzugstellung beweglicher Kolben (220) angeordnet ist, der in dem Hohlzylinder (210) einen vorderen axialen Fluidraum (214) und einen hinteren axialen Fluidraum (215), die mittels wenigstens einer Drosselöffnung (223) im Kolben (220) fluidaustauschend miteinander verbunden sind, voneinander abgrenzt, wobei der Kolben (220) starr mit einer den vorderen Fluidraum (214) durchsetzenden Kolbenstange (221) verbunden ist und in seiner Rückzugstellung, in der das Volumen des hinteren axialen Fluidraums (215) minimiert und das Volumen des vorderen axialen Fluidraums (214) maximiert ist, an einem festen Anschlag (218) anliegt,
**als**
ein höhenverstellbar am Gerätekörper eines Laborgerätes (100) angeordneter Stellfuß (200), wobei die Federvorspannung so dimensioniert ist, dass das bei Aufstellung des Laborgerätes (100) auf dem Stellfuß (200) lastende Gewicht des Gerätekörpers hinreicht, den Kolben (220) gedämpft in seine Rückzugstellung zu verfahren.

2. Verwendung nach Anspruch 1,
**dadurch gekennzeichnet,**
**dass** der Hohlzylinder (210) ein Außengewinde (211), das in ein korrespondierendes Innengewinde (111) am Gerätekörper eingeschraubt ist, sowie ein starr mit ihm verbundenes Rotations-Betätigungselement (213) aufweist.

3. Laborgerät mit einem Gerätekörper, der auf einer Mehrzahl von an ihm angebrachten Stellfüßen (200) auf einer Grundfläche aufstellbar ist,
**dadurch gekennzeichnet,**
**dass** wenigstens ein Stellfuß (200) einen fluidgefüllten Hohlzylinder (210) umfasst, in dem ein axial zwischen einer durch eine Federvorspannung unterstützten Vorschubstellung und einer entgegen der Federvorspannung einnehmbaren Rückzugstellung beweglicher Kolben (220) angeordnet ist, der in dem Hohlzylinder (210) einen vorderen axialen Fluidraum (214) und einen hinteren axialen Fluidraum (215), die mittels wenigstens einer Drosselöffnung (223) im Kolben (220) fluidaustauschend miteinander verbunden sind, voneinander abgrenzt, wobei der Kolben (220) starr mit einer den vorderen axialen Fluidraum (214) durchsetzenden Kolbenstange (221) verbunden ist und in seiner Rückzugstellung, in der das Volumen des hinteren axialen Fluidraums (215) minimiert und das Volumen des vorderen axialen Fluidraums (214) maximiert ist, an einem festen Anschlag (218) anliegt,
und wobei die Federvorspannung so dimensioniert ist, dass das beim Aufstellen des Laborgerätes (100) auf dem Stellfuß (200) lastende Gewicht des Gerätekörpers hinreicht, den Kolben (220) gedämpft in seine Rückzugstellung zu verfahren.

4. Laborgerät nach Anspruch 3,
**dadurch gekennzeichnet,**
**dass** der Hohlzylinder (210) ein Außengewinde (211), das in ein korrespondierendes Innengewinde (111) am Gerätekörper eingeschraubt ist, sowie ein starr mit ihm verbundenes Rotations-Betätigungselement (213) aufweist.

5. Laborgerät nach Anspruch 3,
**dadurch gekennzeichnet,**
**dass** der Hohlzylinder (210) ein Außengewinde (211) aufweist, das in ein korrespondierendes Innengewinde (111) am Gerätekörper eingeschraubt ist, wobei das Innengewinde rotationsbeweglich am Gerätekörper gelagert und mit einem motorischen Rotationsantrieb versehen ist.

6. Laborgerät nach einem der Ansprüche 3 bis 5,
**dadurch gekennzeichnet,**
**dass** der Kolben (220) in seiner Kolbenseitenwand eine Mehrzahl von die axialen Fluidräume (214, 215) verbindenden Drosselöffnungen (223) aufweist, von denen umso mehr durch einen an der Kolbenseitenwand anliegenden, inneren Wandungsvorsprung (217) des Hohlzylinders (210) verschlossen sind, je weiter der Kolben (220) aus seiner Vorschubstellung in Richtung auf sein Rückzugstellung hin verfahren ist.

7. Laborgerät nach einem der Ansprüche 3 bis 6,
**dadurch gekennzeichnet,**
**dass** eine Mehrzahl derartiger Stellfüße (200) am Gerätekörper angebracht sind.

## Claims

1. The use of a hydraulic shock absorber with a fluid filled hollow cylinder (210), in which a piston (220) which can move axially between an advanced position supported by a spring prestress and a retracted position which can be assumed counter to the spring prestress, which piston (220) separates a front axial fluid space (214) and a rear axial fluid space (215) from each other in the hollow cylinder (210), said front axial fluid space (214) and rear axial fluid space (215) being connected to each other in a fluid-exchanging manner by means of at least one throttle opening (223) in the piston (220), wherein the piston (220) is rigidly connected to a piston rod (221) which penetrates the front fluid space (214), and in its retracted position, in which the volume of the rear axial fluid space (215) is minimized and the volume of the front axial fluid space (214) is maximized, said piston (220) bears against a fixed stop (218),
as a positioning foot (200) which is arranged in a vertically adjustable fashion on the device body of a laboratory device (100), wherein the spring prestress is dimensioned such that the weight of the device body which exerts a load when the laboratory device (100) is installed on the positioning foot (200) is sufficient to move the piston (220) into its retracted position in a damped fashion.

2. The use according to claim 1, **characterized in that** the hollow cylinder (210) has an external thread (211) which is screwed into a corresponding internal thread (111) on the device body, as well as a rotational actuating element (213) that is rigidly connected to it.

3. A laboratory device with a device body that can be placed upon a plurality of positioning feet (200) mounted on it on a base, **characterized in that** at least one positioning foot (200) comprises a fluid-filled hollow cylinder (210) in which a piston (220) which can move axially between an advanced position supported by a spring prestress and a retracted position which can be assumed counter to the spring prestress, which piston (220) separates a front axial fluid space (214) and a rear axial fluid space (215) from each other in the hollow cylinder (210), said front axial fluid space (214) and rear axial fluid space (215) being connected to each other in a fluid-exchanging manner by means of at least one throttle opening (223) in the piston (220), wherein the piston (220) is rigidly connected to a piston rod (221) which penetrates the front fluid space (214), and in its retracted position, in which the volume of the rear axial fluid space (215) is minimized and the volume of the front axial fluid space (214) is maximized, said piston (220) bears against a fixed stop (218),
and wherein the spring prestress is dimensioned such that the weight of the device body which exerts a load when the laboratory device (100) is installed on the positioning foot (200) is sufficient to move the piston (220) into its retracted position in a damped fashion.

4. The laboratory device according to claim 3, **characterized in that** the hollow cylinder (210) has an external thread (211) that is screwed into a corresponding internal thread (111) on the device body, as well as a rotational actuating element (213) that is rigidly connected to it.

5. The laboratory device according to claim 3, **characterized in that** the hollow cylinder (210) has an external thread (211) that is screwed into a corresponding internal thread (111) on the device body, wherein the internal thread is rotationally moveably mounted on the device body and is provided with a motorized rotational drive.

6. The laboratory device according to any of claims 3 to 5, **characterized in that** the piston (220) has in its piston side wall a plurality of throttle openings (223) connecting the axial fluid spaces (214, 215), of which, the further the piston (220) has moved from its front position in the direction of its retracted position, the more said throttle openings are sealed by an inner wall protrusion (217) of the hollow cylinder (210) bearing against the piston side wall.

7. The laboratory device according to any of claims 3 to 6, **characterized in that** a plurality of such positioning foots (200) are mounted on the device body.

## Revendications

1. Utilisation d'un amortisseur hydraulique avec un cylindre creux (210) rempli de fluide, dans lequel est agencé un piston (220) déplaçable axialement entre une position d'avancement soutenue par une précontrainte de ressort et une position de retrait qui peut être prise à l'encontre de la précontrainte de ressort, lequel piston délimite l'un de l'autre dans le cylindre creux (210) un espace fluide axial avant (214) et un espace fluide axial arrière (215), qui sont raccordés ensemble de façon à pouvoir échanger du fluide au moyen d'au moins une ouverture d'étranglement (223) dans le piston (220), dans laquelle le piston (220) est raccordé de façon rigide à une tige de piston (221) qui traverse l'espace fluide axial avant (214) et, dans sa position de retrait, dans laquelle le volume de l'espace fluide axial arrière (215) se minimalise et le volume de l'espace fluide axial avant (214) se maximalise, repose contre une butée (218) fixe,
en tant que
pied réglable (200) agencé de façon réglable en hauteur contre le corps d'appareil d'un appareil de laboratoire (100), dans laquelle la précontrainte de ressort est dimensionnée de telle sorte que le poids qui pèse sur le pied réglable (200) du corps d'appareil lors du montage de l'appareil de laboratoire (100) suffit à déplacer le piston (220) de façon amortie jusque dans sa position de retrait.

2. Utilisation selon la revendication 1,
**caractérisée en ce que**
le cylindre creux (210) présente un filetage mâle (211) qui est vissé contre le corps d'appareil dans un filetage femelle (111) correspondant, ainsi qu'un élément d'actionnement de rotations (213) raccordé de façon rigide à lui.

3. Appareil de laboratoire avec un corps d'appareil, qui peut être monté sur une surface de base sur une pluralité de pieds réglables (200) placés contre lui,
**caractérisé en ce que**
au moins un pied réglable (200) comprend un cylindre creux (210) rempli de fluide, dans lequel est agencé un piston (220) déplaçable axialement entre une position d'avancement soutenue par une précontrainte de ressort et une position de retrait qui peut être prise à l'encontre de la précontrainte de ressort, lequel piston délimite l'un de l'autre dans le cylindre creux (210) un espace fluide axial avant (214) et un espace fluide axial arrière (215), qui sont raccordés ensemble de façon à pouvoir échanger du fluide au moyen d'au moins une ouverture d'étranglement (223) dans le piston (220), dans lequel le piston (220) est raccordé de façon rigide à une tige de piston (221) qui traverse l'espace fluide axial avant (214) et, dans sa position de retrait, dans laquelle le volume de l'espace fluide axial arrière (215) se minimalise et le volume de l'espace fluide axial avant (214) se maximalise, repose contre une butée (218) fixe,
et dans lequel la précontrainte de ressort est dimensionnée de telle sorte que le poids du corps d'appareil qui pèse sur le pied réglable (200) lors du montage de l'appareil de laboratoire (100) suffit à déplacer le piston (220) de façon amortie jusque dans sa position de retrait.

4. Appareil de laboratoire selon la revendication 3,
**caractérisé en ce que**
le cylindre creux (210) présente un filetage mâle (211) qui est vissé contre le corps d'appareil dans un filetage femelle (111) correspondant, ainsi qu'un élément d'actionnement de rotations (213) raccordé de façon rigide à lui.

5. Appareil de laboratoire selon la revendication 3,
**caractérisé en ce que**
le cylindre creux (210) présente un filetage mâle (211) qui est vissé contre le corps d'appareil dans un filetage femelle (111) correspondant, dans lequel le filetage femelle est monté contre le corps d'appareil de façon à pouvoir se déplacer en rotation et est doté d'un entraînement en rotation motorisé.

6. Appareil de laboratoire selon l'une des revendications 3 à 5,
**caractérisé en ce que**
le piston (220) présente, dans sa paroi latérale de piston, une pluralité d'ouvertures d'étranglement (223) qui raccordent les espaces fluides axiaux (214, 215), dont plus ils sont fermés par une saillie de paroi (217) du cylindre creux (210) intérieure et qui repose contre la paroi latérale de piston, plus le piston (220) sera déplacé loin depuis sa position d'avancement en direction de sa position de retrait.

7. Appareil de laboratoire selon l'une des revendications 3 à 6,
**caractérisé en ce que**
une pluralité de tels pieds réglables (200) sont placés contre le corps d'appareil.
